# EUROPEAN PATENT APPLICATION

(11) **EP 2 191 961 A2**
(43) Date of publication of application: **02.06.2010**
(21) Application number: 08805406.9
(22) Date of filing: 02.09.2008
(51) Int. Cl.: B32B 9/04, B32B 27/32, B32B 18/00, C04B 41/48, E04C 2/26, E04D 1/16

(54) **SUBSTRATES CONTAINING A POLYMER LAYER AND PREPARATION METHODS THEREFOR**

(30) Priority: 03.09.2007 WO PCT/ES2007/070154
(71) Applicant: Dow Global Technologies Inc., Midland, MI 48674 (US)
(72) Inventor: SANDKUEHLER, Peter, E-43003 Tarragona (ES); PARKINSON, Shaun, E-43007 Tarragona (ES); NIETO, Jesús, E-43850 Tarragona (ES); MARTIN, Carola, 77830 Buehlertal-obertal (DE); PÉREZ SEGÚ, Mario, E-43002 Tarragona (ES); SANZ SOLANA, Vicente, E-46007 Valencia (ES); SANCHEZ VILCHES, Enrique, E-46007 Valencia (ES); MORENO BERTO, Arnaldo, E-12005 Castellón De La Plana (ES)
(74) Representative: Hayes, Adrian Chetwynd
(86) International application number: PCT/ES2008/070169
(87) International publication number: WO 2009/030802

(57) **Abstract**

The invention provides an article comprising at least the following components:
A) a substrate formed from a composition comprising at least one ceramic component or at least one natural stone component,
B) a polymer layer formed from a composition comprising at least one functionalized olefin-based polymer; and
wherein the polymer layer is formed over one surface of the substrate.

## Description

### REFERENCE TO RELATED APPLICATIONS

This application claims the benefit of International Patent Application No. PCT/ES2007/070154, filed on September 3, 2007, and fully incorporated herein by reference.

### FIELD OF INVENTION

The invention provides for substrates containing a polymer layer, and for methods for making the same. Each polymer layer is formed from a composition comprising at least one functionalized olefin-based resin. Each substrate is formed from a composition comprising at least one ceramic component or at least one stone component.

### BACKGROUND OF THE INVENTION

In façade construction (for example, back-ventilated façades) the cladding slabs (ceramic tiles) are fixed in frames, and are not individually attached to the back wall. Thus, the impact of a hard body (for example a falling stone), onto the cladding, can cause fracture of the slab, and the broken pieces of the slab, or the entire slab, can detach and fall from the frame. In a worst case scenario, the entire configuration of slabs can collapse and fall down. C. T. Grimm quoted this problem as follows: "[m]asonry falls off a building facade somewhere in the United States about every three weeks. Over the past few years in the United States, at least 49 such masonry failures have killed 30 persons and injured 81" (Clayford T. Grimm (ASTM member), August 2003). Thus, improved integrity of the slabs (for example, ceramic tiles) by adhesion to stabilizing elements, such as films, is needed.

German Application No. DE 19934451 A1 relates to a façade composite panel, used in rear ventilated façade cladding. The composite is made of a natural stone surface of 4 mm thickness, and glued to a supporting slab made of minerally bound polystyrene particles.

German Application No. DE 10342357 A1 relates to a natural stone composite panel that is composed of several layers that are glued together, whereupon the supporting slab is of a lightweight construction. A suitable glue layer is an adhesive epoxy resin, and one layer might be composed of a fiber-reinforced plastic composite layer. The natural stone layer can be arbitrarily thin. The lightweight support is constructed as a hollow profile part, resulting in a high resilience, and permitting easy installation of cables.

U.S. Publication No. 2006/0159900 A1 discloses a hard surface veneer (example, ceramics, porcelains, marble, granite or stone) adhered to a coreboard, using, in the first step, a pressure sensitive hot-melt adhesive (vinyl acetate, vinyl copolymer and/or a tackifying resin, polyethylene-based compositions), and secondly, using a stronger, more permanent curable polyurethane resin. This invention relates to laminated flooring featuring interlockable tiles.

U.S. Patent 3,950,202 discloses a veneer product made of a natural stone slab, for example, marble or granite, adhesively bonded to a support (plywood or honeycomb material). The cells of the honeycomb can be filled with a heat or sound insulation material, such as foam polyurethane, polystyrene, glass or asbestos fibers.

U.S. Patent 3,724,152 discloses a masonry laminate comprising a facing sheet of architectural grade marble, granite, or the like; a supporting member of hard stone, such as marble or granite; and a backing member of concrete or combination of concrete and hollow blocks. The facing sheet is cemented to the support by a thin layer of a high-strength, non-shrinking, quick-setting adhesive (example, cement mortar or epoxy cement), and the bond is reinforced by metal rods.

U.S. Patent 6,698,149 B1 discloses a decorative, composite, laminated building material (non-load bearing), composed of a foamed core (PS, PE or similar material), a thin fabric mat attached to at least one surface of the foam core, and a durable material such as tile, brick or stone. The durable material is attached to the fabric mat with a binding agent. The fabric mats (woven or non-woven) are preferably made of strong materials, such as fiberglass, nylon, polyester or Kevlar® fiber. The laminate components are bonded to one another using adhesive resins, such as a thermosetting polyester, polyurethane or styrene. Optionally, the panel may include a final finish covering the exposed exterior surface. The final finish layer may be an adhesive, as discussed above, or an acrylic, epoxy, polyurethane, or powder coat.

European Patent EP 1273432 B1 discloses a composite panel for making furniture pieces, and comprising a first plate element and a second plate element. The first plate element and the second plate element are coupled by a corrugated spacer made of a metal material. The first plate is made of a ceramic, a stone, or a marble material. The second plate may be made from a synthetic laminated material, a glass-resin material, a glass fabric material, a PLEXIGLASS material, different plastics or synthetic resins.

German Application No. DE 3804311 A1 discloses a large size sheet, and in particular, relatively thin sheet for use in cladding façades, and which is made of ceramics, stoneware, natural stone or artificial stone, and has a coating on the reverse side. This coating or a frame (or both) are made of epoxy resin, with or without glass reinforcement. A sheet of inorganic material can have a flat backing of glass-reinforced epoxy resin, and this can be brought out to make a frame for the sheet. The inorganic material can even be made from several flat pieces, which are bonded together along their edges to form one large rectangular area, and where the backing also provides the edge bonds. The backing itself can have a laminar structure, with, for example, glass fibers reinforcing one layer, and a glass mat the next layer. The products have sufficient mechanical strength to resist breakage, and they are dimensionally accurate enough to require no trimming.

European Patent Application EP 0596681 A1 discloses a water-resistant, masonry-bondable membrane, comprising a laminate, which comprises a layer of a flexible sheet material, for example, polyvinyl chloride; chlorinated polyethylene; polypropylene; polyurethane; or a copolymer made from vinyl chloride monomers and small amounts of comonomers, such as esters of acrylic acid, vinyl acetate, esters of methacrylic acid, styrene, styrene derivatives, diolefins and monolefins. The amount of comonomer is generally up to 30 weight percent. A second, similar laminate sheet of polyvinyl chloride, with a non-woven fiber layer bonded thereto, is then bonded to the first laminate, with the layers fused together by heat and pressure to form a single, four-ply laminate, which may be bonded, for example, using mortar or cement, to a concrete substrate, to form a water-resistance and crack-resistant base for an exterior masonry article, such as ceramic tile.

U.S. Patent 5,860,255 (see also DE 19719655 A1) discloses a water-resistant, masonry-bondable membrane, comprising a laminate having a core, containing at least two plies of flexible material, bonded together by a flexible adhesive, such as a plastisol, and a non-woven fiber layer, physically bonded directly to at least one side of the core. Example of flexible polymers include polyvinyl chloride; chlorinated polyethylene; polypropylene; polyurethane; or a copolymer made from vinyl chloride monomers and small amounts of comonomers, such as esters of acrylic acid, vinyl acetate, esters of methacrylic acid, styrene, styrene derivatives, diolefins and monolefins. The amount of comonomer is generally up to 30 weight percent. The laminate is useful between masonry and cladding, such as ceramic tiles, for example, in markets and shopping centers, and on terraces and cellar walls clad, with ceramic tiles, cement slabs, and marble. The non-woven fiber layer, which is partly embedded in the flexible layer, gives a good mechanical bond with, for example, mortar or cement, at low and high temperature.

German Patent Application No. DE 19940219 A1 discloses a quick-lay stone cladding system, comprising a thin, self-supporting panel of artificial stone having cracks and seams, and backed with a fabric-reinforced laminate. The system is useful for decorative cladding of flat surfaces, and the cracks and seams give a natural, neglected appearance. This reference discloses laminates on tile back, comprised of foamed polystyrene, and adhesive filling composites comprising acrylic or anhydrite chemistries.

European Patent Application EP 810085 A1 discloses a laminated material, especially for internal or external wall facing panels, and consisting of a layer of rock, especially a decorative rock such, as marble, attached by an adhesive layer, to at least one sheet of glass. The laminated material is translucent, making it suitable for backlighting, and the adhesive is transparent, and based on a polyurethane thermoplastic. In a variant, the adhesive can be a pre-formed layer of a thermoplastic material, for example, a polyurethane, polyvinylbutyral, ethylene vinyl acetate or silicone. Additional resins include epoxy, thermoplastic polyurethane, organosilanes and polycarbonate. The rock and glass layers are treated prior to assembly to give them improved adhesion; for example, by coating them with a resin, followed by gamma curing, or by priming with an organosilane material, for example, g-glycidoxypropyltrimethoxysilane.

U.S. Patent 5,052,161 discloses a flooring structure that comprises a rigid base or substrate (typically wood or concrete), an outer ceramic tile or outer fracturable material, and a high impact strength "crack isolation sheet" interposed between the base and the tile. The "crack isolation sheet" is made of impact resistant material, and comprises a thin base portion with a regular series of rows of upstanding projections, with each projection surrounded by an annular recess. The base portion of the "crack isolation sheet" is adhesively bonded to the base or substrate. Preferably, the sheet is of thermoplastic, such as high impact polystyrene, although other thermoplastic materials, such as ABS and polyethylene may be used. Suitable adhesives are rubber-based or polyurethane based.

U.S. Patent 4,832,995 discloses a laminated panel for use as a wall or floor covering, and which comprises a pre-grouted layer of ceramic tiles bonded to a fiber-reinforced, water-impervious backing layer. A removable facing layer is adhered to the front face of the panel to complete the laminate. The facing layer imparts increased strength and rigidity to the panel during shipping, handling, and installation, and permits the panels to be cut using ordinary carpentry tools, without damaging the ceramic tiles. The grout includes masonry mortar, polyurethane, vulcanizing silicone, and other elastomers/plastics. Synthetic resins suitable for impregnating the backing sheet include unsaturated polyesters, phenolic resins, epoxy resins and silicone resins.

Japanese Publication No. JP 01-099838 (Abstract) discloses a multilayered reinforced ceramic product composed of several ceramic plates, and reinforcing plates, such as synthetic resin sheet, paper, rubber sheet, or metal foil. Each ceramic thin sheet and each reinforcing thin sheet are alternately arranged, and bonded integrally with an adhesive.

Canadian Patent Application No. 2,136,773 (see also EP0657281B1) discloses a multi-layered structural member, comprising a core of a foamed plastic of primary material, and optionally, flocks of foam plastic connected therewith, and at least one covering layer having a supporting body of fibers. The fibers are arranged on the surface of the core, and are connected to the core. The fibers are embedded in a layer of thermoplastic synthetic material, forming a covering layer. Examples of thermoplastic synthetic materials include ethylene, propylene, polyamides, polypropylene, polystyrene, ABS, PVC and polyimide. Mention is made of a supporting body comprising a network, a knitted fabric, or a mat of fibers and filaments, where the material can be selected from glass, Kevlar, metal, graphite, textile, plastic, ceramic, natural fibers or carbon.

U.S. Publication No. 2004/0161546 A1 discloses an artificial stone veneer product that has a thin substrate (example, wood, metal, plastic) covered by a stone veneer having a pitted, uneven surface, with an appearance similar to travertine. To make the product, layers of polymer resin and particulate matter are applied to a substrate. A thin layer of polymer resin is first applied to the substrate, followed by a layer of fine particulate matter (example, granite, limestone, quartz, marble and slate) that, at least, partially settles into the resin, and the resin is allowed to set partially. Another layer of polymer resin is applied to the underlying layers in a nonuniform manner over the underlying layers, resulting in a moderately porous layer having randomly located voids of varying size and shape. A final layer of particulate matter is then applied over the polymer layer, and the resin is allowed to set completely. Both thermoplastic (example polyester) and thermosetting (example epoxy) resins can be used as the polymer resin.

U.K. Patent Application No. GB 2392866 discloses a composite safety tile mainly designed for use in recreational areas, and comprising an upper wearing surface layer, a lower layer of polymeric resilient material, and a flexible reinforcing mesh incorporated between the layers. The tile may be manufactured by compression molding recycled SBR granules/shred mixed with a catalyzed diphenylmethane-diisocyanate (MDI)-based pre-polymer, chicken wire, and colored EPDM granules mixed with a catalyzed diphenylmethane-diisocyanate (MDI)-based pre-polymer.

U.S. Patent 4,307,140 discloses a laminated article comprising a plurality of abrasive resistant ceramic tiles, secured to an elastomeric polyurethane cushioning support, by means of a multitude of short thin fibers, having major portions, thereof, embedded within an epoxy resin, bonded to the tiles. The article is fabricated by applying a thin layer of the resin, in an uncured liquid phase, to the tiles; applying a coating of the fibers to the liquid resin, such that minor portions of the fibers, in contact with the resin, are wet thereby, and the remaining major portions of the fibers extend from the resin layer; curing the resin to secure the fibers therein, and to bond the resin to the tiles; applying a layer of a thermosetting polyurethane in an unpolymerized liquid phase to the fiber impregnated resin layer; and thereafter curing the polyurethane layer.

European Patent Application No. EP 0244993 A2 discloses a laminated ceramic structure, which contains a facing member bonded to a backing member, directly, or through an intermediate layer of film. The intermediate layer refers to a glass frit that may be applied between the plates, and heated, via the subsequent heating of the assembly, to a temperature at which the glass softens and wets the surfaces of the plates.

Further patents related to natural stone panel composites include the following: DE 4218481 A1 (stone panel laminated with epoxy resin and optional incorporation of armoring); DE 19547123 A1 (natural stone/wood jointed by a fiber reinforced glue layer; latter based on cement formulation); DE 19726502 C1 (natural stone layer/stone knock-off (foamed PU-silica dust particles-additives mixture)); and DE29508697 U1 (slate/light weight construction (hollow profile, honeycomb or grid made of rigid foam, aluminum or plastic)).

Some have tried to solve the "fracture safety" problem by using ceramic composites or stone composites, to allow lighter and more impact-resistant structures, although chemical resistance is limited by the resin. Others approach the problem by gluing or cementing the material to different supports, as plywood, honeycomb, foam polyurethane resins or fabric mats of fiberglass, polyaramide or polyether. Some of these adhesives show secondary issues, such as industrial hygiene issues in the case of polyester resins.

There remains a need for ceramic and stone substrates with improved impact absorption. There are additional needs for substrates with the following: (1) improved safety performance over PET mesh thermoset, typically used as an adhesive in tiling applications; (2) substrates with improved industrial hygiene; (3) substrates with improved economics for manufacturing, by means of a lamination or coating process that does not require a curing time, and that can be on-line applied, in one step, instead of manually off-line, as is currently done; and (4) substrates with improved overall safety performance, and, in particular, improved safety performance when placed on rear-ventilated façades. There is a further need for such substrates of downgaged thickness, with equal safety performance, for more cost savings in the production of the substrate. Some of these needs and others have been met by the following invention.

### SUMMARY OF THE INVENTION

The invention provides an article comprising at least the following components:
A) a substrate formed from a composition comprising at least one ceramic component or at least one natural stone component,
B) a polymer layer formed from a composition comprising at least one functionalized olefin-based polymer; and
   wherein the polymer layer is formed over one surface of the substrate.

### BRIEF DESCRIPTION OF THE DRAWINGS

Figure 1 is a schematic of the supporting frame for the "ball drop test."
Figure 2 is a schematic of the setup used for the heat lamination of substrates used in the adhesion peel test.
Figure 3 is a schematic of a test specimen used in the adhesion peel test.
Figure 4 is a schematic of the "specimen fixation device" of the tensile machine grips used in the adhesion peel test.
Figure 5 depicts the effect of comonomer content on adhesion (polymer MFI of approximately 9, and substrate is a porcelain stoneware ceramic prepared by the Instituto de Tecnología).
Figure 6 depicts the effect of melt index on adhesion for EAA copolymers (comonomer content of 9.7 percent) laminated to ITC ceramics.
Figures 7a and 7b depict the substrate effect on adhesion for (a) polyethylene EAA copolymer (Primacor^{™}) and (b) polyethylene g-MAH polymer (Amplify^{™}).
Figure 8 depicts the effect of the polymer functional group (substrate: porcelain stoneware ceramic prepared by the Instituto de Tecnología).
Figure 9 depicts an adhesion comparison between the different polymers (substrate: porcelain stoneware ceramic prepared by the Instituto de Tecnología).

### DETAILED DESCRIPTION OF THE INVENTION

### General Overview

The invention provides for substrates laminated or coated with a film(s) formed from one or more functionalized olefin-based polymers, or a composition comprising the same. Such substrates can be used to tile rear-ventilated façades to improve the safety performance of these façades. The film can be a monolayer film or co-extruded film of polymers, mainly ethylene-based polymers or propylene-based polymers. Lamination or extrusion coating with a film form from a functionalized olefin-based polymer, as described herein, helps to absorb the energy of impact of the substrate, and helps to secure broken pieces of the substrate to the film.

By attaching a back sheet formed from a functionalized olefin-based polymer, such as a functionalized ethylene-based polymer, to the substrate, the fracture pieces are held in place, and falloff is significantly reduced. As discussed above, this back sheet can be a monolayer film or co-extruded film. The primary purpose is to prevent falloffs in case the slabs of ventilated façades break.

In particular, as discussed above, the invention provides an article comprising at least the following components:
A) a substrate formed from a composition comprising at least one ceramic component or at least one natural stone component,
B) a polymer layer formed from a composition comprising at least one functionalized olefin-based polymer; and
wherein the polymer layer is formed over one surface of the substrate.

In one embodiment, the polymer layer is in the form of a film or a coating or a foam, and preferably in the form of a film or coating. In a further embodiment, the polymer layer is in the form of a film. In another embodiment, the polymer layer is in the form of a coating. In another embodiment, the polymer layer is in the form of a laminated film. In yet another embodiment, the polymer layer is in the form of an extrusion coating.

In another embodiment, the polymer layer is in the form of a multi-layered (at least two layers or plies) film.

In another embodiment, the polymer layer is a coextruded multi-layered film.

In another embodiment, article comprises at least two substrates. In a further embodiment, the polymer layer is formed between the two substrates.

In another embodiment, article comprises at least two polymer layers. In a further embodiment, one polymer layer is formed over one surface of the substrate, and the other polymer layer is formed over another surface of the same substrate.

In another embodiment, functionalized olefin-based polymer is selected from a functionalized ethylene-base polymer or a functionalized propylene-based polymer. In a further embodiment, the functionalized olefin-based polymer is a functionalized ethylene-base polymer.

In another embodiment, the substrate is in the form of a tile, and the polymer layer is formed over one surface of the tile.

In another embodiment, the substrate is in the form of a tile, and the polymer layer is formed over the back surface of the tile.

An inventive article may comprise a combination of two or more embodiments as described herein.

### Substrates

Suitable substrates include ceramic substrates and stone substrates. Ceramic substrates include, but are not limited to, oxides, silicates, silicoaluminates, carbides, nitrides, silicides; combinations of oxides and non-oxides, and materials including any of them in a matrix of a glass, a metal, a polymer a ceramic or combinations thereof, and composite ceramics.

In one embodiment of the invention, the ceramic is selected from a ceramic prepared by the Instituto de Tecnología Cerámica (ITC), or a commercial ceramic, such as a roughened or polished commercial porcelain stoneware.

Stone substrates include, but are not limited to, granite, sandstone, marble, limestone and slate. In one embodiment, the substrate is selected from granite or marble.

The compositions of some substrates are listed below in Table 1.

**Table 1: Suitable Substrates**

| | CRERAMIC | | GRANITE | | | SANDSTONE | MARBLE | | | LIME |
|---|---|---|---|---|---|---|---|---|---|---|
| | | | | Examples | | | | Examples | | |
| | ITC CERAMI C^{[1]} | White monoporosa ^{[2]} | Average Compositio n ^{[3]} | Serizzo Formazza ^{[4]} | Rosa Beta ^{[4]} | Average Composition ^{[5]} | Basic Composition ^{[5]} | Bianco Carrara Brouille ^{[4]} | Ptekeos Pink ^{[4]} | Basic Composition ^{[5]} |
| Origin | | | | Italy | Italy | | | Italy | Grece | |
| SiO₂ | 67.1 | 65.5 | 72.04 | 67.2 | 75.8 | 93-94 | | 0.08 | 1 | |
| Al₂O₃ | 20.9 | 15.2 | 14.42 | 18.1 | 14.4 | 1.4-1.5 | | 0.04 | | |
| K₂O | 2.13 | 2.1 | 4.12 | 3 | 3.9 | 1.0-1.2 | | 0.02 | 0.05 | |
| Na₂O | 2.01 | 0.3 | 3.69 | 3.5 | 4.3 | | | | 0.08 | |
| MnO | 0.01 | | 0.05 | | | | | 0.01 | | |
| TiO₂ | 0.76 | 0.5 | 0.3 | 0.4 | 0.32 | | | | | |
| Fe₂O₃ | 0.72 | 0.9 | 1.22 | 1.2 | 3 | 1.5-1.6 | | 0 | 0.85 | |
| FeO | | | 1.68 | 2 | | | | | | |
| CaO | 0.49 | 5.8 | 1.82 | 3.8 | 2.4 | 0.8-0.9 | | | | |
| MgO | 0.29 | 0.4 | 0.71 | 0.8 | 0.7 | 0.2-0.25 | | | | |
| P₂O₅ | 0.13 | | 0.12 | | 0.09 | | | | | |
| Loss on Ignition | 5.3 | 9.1 | | | | | | | | |
| CaCO₃ | | | | | | | Main Component | 98.29 | 96.06 | > 50; if > 95 high calcium lime stone |
| MgCO₃ | | | | | | | > 40 Dolomite Marble 5-4 Magnesium Marble < 5 Calcite Marble | 1.55 | 2.79 | |

| | | | | | | | | | | |
|---|---|---|---|---|---|---|---|---|---|---|
| [1] ITC - Instituto de Tecnologia Cerámica [2] Dondi M. et al., Applied Clay Science 18(2001), 145-155 [3] Based on 2485 analyses. Source: http://en.wikipedia.org/wiki/Granite Reference: Harvey Blatt and Robert J. Tracey (1996). Petrology, 2nd edition, New York : Freeman, 66 [4] ISIC entry. INTERNAZIONALE MARMI MACCHINE CARRARA SpA; http://www.isicentry.com/eng-site/ricmat.asp [5] Mineral zone. http://www.mineralszone.com | | | | | | | | | | |

In one embodiment, the substrate is formed from a composition comprising at least one of the following: oxides and combinations thereof; alumina; silica, zirconia; silicates, carbides; nitrides; silicides, combinations of oxides and non-oxides; or combinations thereof.

In another embodiment, the substrate is formed from a composition comprising at least one ceramic component. In a further embodiment, the substrate comprises 62-72 wt percent SiO2, and 15-25 wt percent Al2O3, based on the total weight of the substrate. In another embodiment, the substrate is selected from the group consisting of the following: a reference ceramic prepared by the Instituto de Tecnología Cerámica (ITC), and a commercial ceramic, for example a roughened or a polished commercial ceramic.

In another embodiment, the substrate has the following composition: 65-75 wt percent SiO2, 14-21 wt percent Al2O3, and 2-5 wt percent K2O, based on the total weight of the substrate.

In another embodiment, the substrate has the following composition: 65-75 wt percent SiO2, 14-21 wt percent Al2O3, 2-5 wt percent K2O, 2 wt percent Na2O, 0.01 wt percent MnO, 0.75 wt percent TiO2, 0.7 wt percent Fe2O3, 0.5 wt percent CaO; 0.3 wt percent MgO, and 0.1 wt percent P2O5, based on the total weight of the substrate.

In another embodiment, the substrate has the following composition: 65-75 wt percent SiO2, 14-21 wt percent Al2O3, 2-5 wt percent K2O, 0.01-0.05 wt percent MnO, 0.2-0.8 wt percent TiO2, 0.5-3 wt percent Fe2O3, 0-2 wt percent FeO, 0.5 wt percent CaO; 0.1-1 wt percent MgO, and 0-0.2 wt percent P2O5, based on the total weight of the substrate.

In another embodiment, the substrate is a ceramic substrate with a main crystalline structure, before firing, composed of albite (NaAlSi3O8), quartz (SiO2), kaolinite (Al2Si2O5(OH)4), and illite (H2KAl3(SiO4)3). In a further embodiment, the crystalline structure has an open porosity is between 0.1-0.5 percent (as measured by ISO 10545-3).

In another embodiment, the substrate is a composite ceramic substrate.

In another embodiment, the substrate is a composite ceramic substrate, comprising a matrix, which comprises a glass, a metal, a polymer, a ceramic, or combinations thereof.

In another embodiment, the substrate further comprises at least one thermoplastic polymer.

In another embodiment, the substrate is a multi-layered structure.

In another embodiment, the substrate further comprises at least one material selected from the group consisting of wood, metal, glass, and combinations thereof.

In another embodiment, the substrate further comprises at least one laminate layer comprising glass. In a further embodiment, the laminate layer further comprises at least one thermoplastic polymer.

In another embodiment, the substrate is formed from a composition comprising at least one natural stone substrate. In a further embodiment, the natural stone component is selected from the group consisting of granite, quartz, marble, limestone and slate. In yet a further embodiment, the natural stone component is selected from granite or marble. In another embodiment, the substrate is a natural stone composite. In another embodiment, the substrate further comprises at least one thermoplastic polymer.

Another alternative to ceramic tiles is the fabrication of multilayer tiles composed of one or more polymers in addition to one or more ceramic components, or ceramic fibers imbedded into a polymer matrix.

A substrate may comprise a combination of two or more suitable embodiments as described herein.

### Functionalized Olefin-based Polymers

The term "functionalized olefin-based polymer," as used herein, refers to a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or reactive functionalization agent, each containing at least one functional group selected from the following: 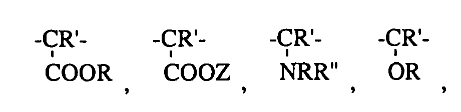 imide, amide, anhydride, dicarboxylates, glycidyl, carbon monoxide, polar group derived from H-TEMPO or an H-TEMPO derivative, silane, or siloxane; and wherein R is hydrogen or alkyl, R' is hydrogen or alkyl, R" is hydrogen or alkyl, and Z is Na+ or K+. In a further embodiment, each alkyl group is, independently, methyl, ethyl, propyl or butyl. Preferably the functionalized olefin-based polymer is a functionalized ethylene-base polymer.

In one embodiment, the functionalized olefin-based polymer is a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or reactive functionalization agent, each containing at least one functional group selected from the following: 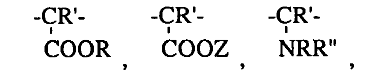 imide, amide, anhydride, dicarboxylates, glycidyl, polar group derived from H-TEMPO or an H-TEMPO derivative, silane, or siloxane; and wherein R is hydrogen or alkyl, R' is hydrogen or alkyl, R" is hydrogen or alkyl, and Z is Na+ or K+. In a further embodiment, each alkyl group is, independently, methyl, ethyl, propyl or butyl. Preferably the functionalized olefin-based polymer is a functionalized ethylene-base polymer.

In another embodiment, the functionalized olefin-based polymer is a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or reactive functionalization agent, each containing at least one functional group selected from the following: 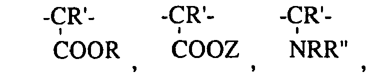 imide, amide, anhydride, dicarboxylates, glycidyl, polar group derived from H-TEMPO or an H-TEMPO derivative; and wherein R is hydrogen or alkyl, R' is hydrogen or alkyl, R" is hydrogen or alkyl, and Z is Na+ or K+. In a further embodiment, each alkyl group is, independently, methyl, ethyl, propyl or butyl. Preferably the functionalized olefin-based polymer is a functionalized ethylene-base polymer.

In yet another embodiment, functionalized olefin-based polymer is a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or reactive functionalization agent, each containing at least one functional group selected from the following: 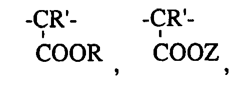 anhydride, dicarboxylates, or glycidyl; and wherein R is hydrogen or alkyl, R' is hydrogen or alkyl, and Z is Na+ or K+. In a further embodiment, each alkyl group is, independently, methyl, ethyl, propyl or butyl. Preferably the functionalized olefin-based polymer is a functionalized ethylene-base polymer.

In yet another embodiment, functionalized olefin-based polymer is a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or reactive functionalization agent, each containing at least one functional group selected from the following: 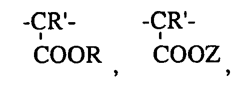 anhydride; and wherein R is hydrogen or alkyl, R' is hydrogen or alkyl, and Z is Na+ or K+. In a further embodiment, each alkyl group is, independently, methyl, ethyl, propyl or butyl. Preferably the functionalized olefin-based polymer is a functionalized ethylene-base polymer.

In yet another embodiment, functionalized olefin-based polymer is a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or reactive functionalization agent, each containing at least one functional group selected from the following: 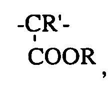 anhydride; and wherein R is hydrogen or alkyl, R' is hydrogen or alkyl, and Z is Na+ or K+. In a further embodiment, each alkyl group is, independently, methyl, ethyl, propyl or butyl. Preferably the functionalized olefin-based polymer is a functionalized ethylene-base polymer.

Functionalized olefin-based polymers include, but are not limited to, functionalized ethylene-based polymers and functionalized propylene-based polymers. Some polar groups that serve as the functionalization moiety include, for example, carboxylic acid (for example, EAA); methyl, ethyl, butyl and other R-carboxylates (for example, EMA, EEA, EBA), maleic anhydride (for example, PE-gr-MAH), imide, amine, glycidyl (for example, GMA), carbon monoxide (for example, ECO), H-Tempo functionalized, silane and siloxane functionalized.

Additional functionalized olefin-based polymers include, but are not limited to, ethylene acrylic acid copolymers (EAA); ethylene acrylate copolymers (such as ethylene butyl- acrylate copolymers, ethylene ethyl- acrylate copolymers and ethylene methyl-acrylate copolymers (EBAs, EEAs and EMAs)); ethylene/butyl acrylate/carbon monoxide (EnBACO); ethylene ethylacrylate polymers (EEA), as well as functionally modified polyolefins, such as silane-grafted olefin-based polymer or maleic anhydride grafted olefin-based polymer; ethylene/butyl acrylate/glycidyl methyacrylate (EnBAGMA); ethylene methacrylic acid (E/MAA); ethylene vinyl alcohol; or combinations of two or more of these polymers.

In one embodiment, the functionalized olefin-based polymer has a comonomer content less than 50, preferably less than 40, more preferably less than 30, most preferably less than 20 weight percent (based on the total weight of polymerizable monomer). All individual weight percentages and subranges from 20 to 50 weight percent are included herein and disclosed herein. Preferably the functionalized olefin-based polymer is a functionalized ethylene-base polymer.

In another embodiment, the functionalized olefin-based polymer has a comonomer content less than 20, preferably less than 15, more preferably less than 10 weight percent (based on the total weight of polymerizable monomers). All individual weight percentages and subranges from 5 to 20 weight percent are included herein and disclosed herein. Preferably the functionalized olefin-based polymer is a functionalized ethylene-base polymer.

In another embodiment, the functionalized olefin-based polymer is a high pressure, free-radical initiated, highly branched ethylene-based polymer, such as, ethylene-acrylic acid (EAA) copolymers.

In another embodiment, the functionalized olefin-based polymer comprises from 0.1 weight percent to 30 weight percent carboxyl acid functional groups (based on total weight of polymerizable monomers). In another embodiment, the functionalized olefin-based polymer is an ethylene-based polymer that comprises from 0.1 weight percent to 30 weight percent carboxyl acid functional groups.

In another embodiment, the functionalized olefin-based polymer is a functionalized ethylene-base polymer that is a highly branched polymer comprising units derived from ethylene, and an acrylic acid or an acrylate. In a further embodiment, the comonomer is derived from an acrylate, and the acrylate is selected from ethylacrylate, methylacrylate or butylacrylate. In yet another embodiment, the comonomer is derived from acrylic acid. In a further embodiment, the acrylic acid is present in an amount greater than, or equal to, 5 weight percent, preferably greater than, or equal to, 6 weight percent, and more preferably greater than, or equal to, 8 weight percent, base on the total weight of polymerizable monomers.

In another embodiment, the functionalized olefin-based polymer is an ethylene based copolymer formed from a high pressure polymerization process, and comprising comonomer units derived from acrylic acid or an acrylate. In a further embodiment, the comonomer is derived from an acrylate, and the acrylate is selected from ethylacrylate, methylacrylate or butylacrylate. In yet another embodiment, the comonomer is derived from acrylic acid. In a further embodiment, the acrylic acid is present in an amount greater than, or equal to, 5 weight percent, preferably greater than, or equal to, 6 weight percent, and more preferably greater than, or equal to, 8 weight percent, base on the total weight of polymerizable monomers.

In another embodiment, the functionalized olefin-based polymer is a functionalized ethylene-base polymer that comprises units derived from ethylene and an anhydride, and preferably maleic anhydride. In a further embodiment, the units derived from the anhydride, preferably maleic anhydride, are present in an amount greater than, or equal to, 0.5 weight percent, preferably greater than, or equal to 1.0 weight percent, based on the total weight of the functionalized polymer.

In another embodiment, the functionalized olefin-based polymer is a functionalized ethylene-base polymer, selected from the group consisting of polyethylene acrylic acid copolymer, an anhydride grafted polyethylene, ethylene butylacrylate, ethylene glycidyl methacrylate, ethylene methacrylic acid, ethylene vinyl alcohol, and combinations thereof.

In another embodiment, the functionalized olefin-based polymer is a functionalized ethylene-base polymer, selected from the group consisting of polyethylene acrylic acid copolymer, an anhydride grafted polyethylene, ethylene butylacrylate, ethylene glycidyl methacrylate, ethylene methacrylic acid, and combinations thereof.

In another embodiment, the functionalized olefin-based polymer is a functionalized ethylene-based polymer that comprises at least one polar group, selected from moieties such as carboxylic acid; methyl carboxylate, ethyl carboxylate, butyl carboxylate and other alkyl-carboxylates; anhydride; dicarboxylic acid; imide, amine, glycidyl; carbon monoxide, polar group derived from H-Tempo; silane; or siloxane.

In another embodiment, the functionalized olefin-based polymer has a density from 0.86 to 0.95 g/cc, or from 0.87 to 0.94 g/cc, or from 0.88 to 0.93 g/cc. Preferably the functionalized olefin-based polymer is a functionalized ethylene-based polymer.

In another embodiment, the functionalized olefin-based polymer has a melt index (12: 2.16kg/190°C) from 0.5 g/10 min to 50 g/10 min, or from 1 g/10 min to 30 g/10 min. Preferably the functionalized olefin-based polymer is a functionalized ethylene-based polymer.

Suitable commercial olefin-based polymers include PRIMACOR and AMPLIFY polymers available from The Dow Chemical Company; and other commercial polymers, such as the following ionomeric polymers: SURLYN (available from DuPont), IOTEK (available from ExxonMobil), LOTADER (available from Arkema), NUCREL (available from DuPont), BYNEL (available from DuPont), PLEXAR (available from Lyondell), and TYMOR (available from Rohm Haas).

Some suitable PRIMACOR polymers and AMPLIFY polymers are shown below in Tables 2, 3 and 4.

**Table 2: Suitable Functionalized Ethylene-Based Polymers**

| Comonomer Acrylic Acid (wt%) | | | | | |
|---|---|---|---|---|---|
| 0 | 2 LDPE SC 7641 | | | 8.7 LDPE PT 7009 | 20 LDPE 780E |
| 3 | | | | 7.5 AMPLIFY AA698 | |
| 6.5 | | 5.6 EAA 449 | 5.75 PRIMACOR 3330 | | |
| 8 | | | | 9.8 PRIMACOR 3002 | |
| 9.7 | 1.45 PRIMACOR 1410 | | | 8.5 PRIMACOR 3004 | 20 PRIMACOR 3460 |

**Table 3: Suitable Functionalized Ethylene-Based Polymers**

| Comonomer: Maleic Anhydride graft (wt%) | Melt Index @ 190°C/2.16 kg (PE) |
|---|---|
| < 0.25 | 2.1 AMPLIFY GR 207 |
| >1.0 | 2 AMPLIFY GR 205 |

**Table 4: Suitable Functionalized Ethylene-Based Polymers**

| Commercial Name | Chemical name | Copolymers | Functionality |
|---|---|---|---|
| AMPLIFY | Ethylene Maleic Anhydride Graft | (VLDPE, LDPE, LLDPE or HDPE) + Maleic Anhydride Graft | Succinic Anhydride |
| PRIMACOR | Ethylene Acrylic Acid | LDPE + Acrylic Acid | Acid (-COOH) |

In one embodiment, the ethylene-based functionalized polymer is an ethylene-ethyl acrylate (EEA) copolymer, such as AMPLIFY EA 100.

In another embodiment, the ethylene-based functionalized polymer is an anhydride grafted ethylene-based polymer. In a further embodiment, the anhydride grafted ethylene-based polymer is based on linear low density polyethylene, with a concentration from 0.1 to 0.5 weight percent maleic anhydride (based upon Infrared spectroscopy using analytical standards, Medium 0.25-0.5 wt percent, High 0.5-1.0 wt percent, Very High >1.0 wt percent MAH.). In yet a further embodiment, the anhydride grafted ethylene-based polymer has a melt index, 12 (190°C and 2.16kg), from 0.5 to 5 g/10 min, and preferably from 1 to 3 g/10 min. In another embodiment, the anhydride grafted ethylene-based polymer has a density from 0.900 to 0.940, and preferably from 0.910 to 0.930 g/cc, such as, for example, Amplify^{™} GR 207. The anhydride grafted ethylene-based polymer may have a combination of two or more features discussed above.

In another embodiment, the ethylene-based functionalized polymer is an anhydride grafted ethylene-based polymer that has a melt index, I2 (190°C/2.16 kg) from 1 to 4 g/10 min and a density from 0.890 to 0.910 g/10 min, such as, for example, AMPLIFY GR 208.

In another embodiment, the ethylene-based polymer is a copolymer of ethylene and ethyl acrylate (EEA), such as, for example, ELVALOY 2615 AC (available from DuPont).

In another embodiment, the ethylene-based polymer is a polyethylene acrylic acid copolymer containing from 5 weight percent to 15 weight percent of acrylic acid, based on total weight of polymerizable monomers, and a melt index, 12 (190°C and 2.16kg), from 5 to 15 g/10min, such as, for example, PRIMACOR 3004.

In another embodiment, the olefin-based polymer is functionalized with one or more TEMPO compounds. TEMPO compounds are suitable functionalization agents for use in the functionalized olefin-based polymers of the invention, and are generally represented by compound (I) below:

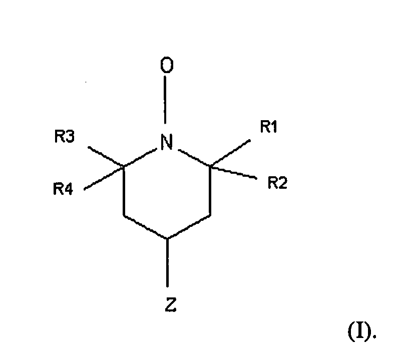

In structure (I), R¹ is either hydrogen, or a C1-C20 hydrocarbyl radical, which is linear or branched. In a preferred embodiment, R¹ is either hydrogen, or a C1-C10, preferably a C1-C8, and more preferably a C1-C6, hydrocarbyl radical, which is linear or branched.

R² is either hydrogen, or a C1-C20 hydrocarbyl radical, which is linear or branched. In a preferred embodiment, R² is either hydrogen, or a C1-C10, preferably a C1-C8, and more preferably a C1-C6, hydrocarbyl radical, which is linear or branched.

R³ is either hydrogen, or a C1-C20 hydrocarbyl radical, which is linear or branched. In a preferred embodiment, R³ is either hydrogen, or a C1-C10, preferably a C1-C8, and more preferably a C1-C6, hydrocarbyl radical, which is linear or branched.

R⁴ is either hydrogen, or a C1-C20 hydrocarbyl radical, which is linear or branched. In a preferred embodiment, R⁴ is either hydrogen, or a C1-C10, preferably a C1-C8, and more preferably a C1-C6, hydrocarbyl radical, which is linear or branched.

In structure (I), Z is either OH, SH, NH₂ or NHR⁵, where R⁵ is a C1-C20 hydrocarbyl radical, which is linear or branched. In a preferred embodiment, R⁵ is either hydrogen, or a C1-C10, preferably a C1-C8, and more preferably a C1-C6, hydrocarbyl radical, which is linear or branched.

Suitable compounds of Structure (I) include, but are not limited to, 2,2,6,6-tetramethyl piperidinyl oxy (TEMPO) and its derivatives. More preferably, hindered amine-derived stable organic free radicals are bis-TEMPOs, oxo-TEMPO, 4-hydroxy TEMPO, an ester of 4-hydroxy-TEMPO, polymer-bound TEMPO, PROXYL, DOXYL, all-tertiary butyl N oxyl, dimethyl diphenylpyrrolidine-1-oxyl, 4-phosphonoxy TEMPO, or a metal complex with TEMPO. Even more preferably, hindered amine-derived stable organic free radical is a bis-TEMPO or 4-hydroxy TEMPO. An example of a bis-TEMPO is bis(1-oxyl-2,2,6,6-tetramethylpiperidine-4 yl)sebacate.

The notation C₁-Cn, where n is 2, 3, 4, etc., and as used in reference to the R groups (R¹, R², R³, R⁴ and R⁵), refers to the range of carbon atoms that are included for each R group. For example, a C1-C20 hydrocarbyl radical refers to a hydrocarbon group containing from 1 to 20 carbon atoms. Also, the range of carbon atoms (for example, C1-C20) includes all individual values (for example, 1, 2, 3, 4, etc.) of the total number of carbon atoms, and includes all subranges (for example, C1-C8, C4-C12, C10-C20, etc.) within the broadest range (for example, C1-C20) of carbon atoms specified. All individual values and subranges are included herein and disclosed herein.

The TEMPO compounds and grafting procedures are described in, for example, International Publication Nos. WO 2005/066279 and WO 2005/066281, and U.S. Provisional Application No. 60/899,723; each fully incorporated herein by reference.

Additives, such as process oils, slip agents, anti-block, AO, UV, fillers, may be added to the functionalized polymer or its polymer precursor. Typically the polymeric resin will contain one or more stabilizers, for example, antioxidants, such as Irganox™ 1010 and Irgafos™ 168, both supplied by Ciba Specialty Chemicals. Polymers are typically treated with one or more stabilizers before an extrusion or other melt processes. Other polymeric additives include, but are not limited to, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents.

A functionalized olefin-based polymer may comprise a combination of two or more suitable embodiments as described herein.

A functionalized ethylene-based polymer may comprise a combination of two or more suitable embodiments as described herein.

The functionalized olefin-based polymer, or a composition comprising the same, is typically formed into a film, and laminated over a substrate of interest. The film may also be extrusion coated onto the substrate. Heat lamination or extrusion coating onto the substrate is best done around the melting point of the functional polymer, and under the application of pressure to ensure intimate contact between substrate and polymer, without endangering the integrity of the substrate.

In addition, multilayer films, blends of ceramic powder and polymer, foams, aluminum foil, or other substrates, can be laminated with a film to improve stability. The coextrusion of functionalized polyolefin materials of higher modulus can be used to enhance the rigidity and the integrity of the laminate, while maintaining adhesive properties via the functionalization of the polymer.

Direct online integration of lamination of the substrate or extrusion coating of the substrate can be incorporated into the substrate production unit, for example, after the substrate is subjected to thermal treatment in a furnace.

The thickness of the film/laminate can be from 1 micron up to 1000 microns, preferably from 300 and 600 micron, depending on the film stiffness desired.

Co-extruded films having one adhesion layer (that will be attached to the substrate), and a high rigidity layer, such as PRIMACOR/HDPE, can also be used. The incorporation of both a mesh and a thermoplastic material into the laminated or coated substrate can also be used.

### Applications

The inventive substrates, containing a polymer layer, can be used as construction tiles, such as façade tiles, wall tiles, flooring tiles, roofing tiles, ceiling tiles, and furniture tiles, such as desk tops and table tops, and indoor - outdoor window sills, and stairs.

Additional applications include substrates for several material combinations, for example, laminating a third layer of ceramic, natural stone, wood, metal, paper or cellulose, glass or other plastics.

The invention also provides a building façade comprising at least one component formed from an inventive article as described herein.

The invention also provides a wall structure comprising at least one component formed from an inventive article as described herein.

The invention also provides a flooring structure comprising at least one component formed from an inventive article as described herein.

The invention also provides a roofing structure comprising at least one component formed from an inventive article as described herein.

The invention also provides a ceiling structure comprising at least one component formed from an inventive article as described herein.

The invention also provides a piece of furniture comprising at least one component formed from an inventive article as described herein.

### DEFINITIONS

Any numerical range recited herein, includes all values from the lower value to the upper value, in increments of one unit, provided that there is a separation of at least two units between any lower value and any higher value. As an example, if it is stated that a compositional, physical or mechanical property, such as, for example, molecular weight, viscosity, melt index, etc., is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (for example, 1.1, 1.5, etc.), one unit is considered to be 0.0001, 0.001, 0.01 or 0.1, as appropriate. For ranges containing numbers less than ten (for example, 1 to 5), one unit is typically considered to be 0.1. These are only examples of what is specifically intended, and all possible combinations of numerical values, between the lowest value and the highest value enumerated, are to be considered to be expressly stated in this application. Numerical ranges have been recited, as discussed herein, in reference to melt index, density and other properties.

The term "ceramic component," as used herein, refers to a nonmetallic, inorganic material comprising at least one chemical compound formed from at least one metallic element and at least one nonmetallic element, selected from C, N, O, P or S, consolidated at high temperatures, (for example, temperatures greater than 500°C).

The term "ceramic tile," as used herein refers to thin (for example, thickness less than 50 cm) slabs made from clays, silica, fluxes, colorants and other ceramic components as discussed above. They are generally used as coverings for floors, walls and façades. Ceramic tiles may be glazed or unglazed, and are incombustible and lightfast resistant. Standard ISO 13006 classifies ceramic tiles in terms of shaping method (pressed, extruded or slip cast) and water absorption, which assesses tile apparent porosity. Tile surface finishing (glazed or unglazed) yields a further classification.

The term "natural stone" as used herein, refers to a dimension stone or dimensional rock, that is, a stone or rock with a determined dimension and finishing.

The term "natural stone component" as used herein, refers to a material comprising a natural stone or a section or piece of a natural stone.

The term porcelain stoneware, as used herein refers to a ceramic material with open porosity, determined as water absorption, lower than one percent weight (water absorption measured in accordance with Standard ISO 13006, as discussed above).

The term stoneware, as used herein refers to a ceramic material with open porosity, determined as water absorption, lower than six percent weight, and greater than one percent weight (water absorption measured in accordance with Standard ISO 13006, as discussed above).

The term earthenware, as used herein refers to a ceramic material with open porosity, determined as water absorption, greater than six percent weight (water absorption measured in accordance with Standard ISO 13006, as discussed above).

The term "composition," as used herein, includes a mixture of materials which comprise the composition, as well as reaction products and decomposition products formed from the materials of the composition.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter. The terms "ethylene/α-olefin polymer" and "propylene/α-olefin polymer" are indicative of interpolymers as described below.

The term "interpolymer," as used herein, refers to polymers prepared by the polymerization of at least two different types of monomers. The generic term interpolymer thus includes copolymers, usually employed to refer to polymers prepared from two different monomers, and polymers prepared from more than two different types of monomers.

The term, "olefin-based polymer," as used herein, refers to a polymer that comprises more than 50 mole percent polymerized olefin monomer, for example polymerized ethylene or polymerized propylene (based on the total amount of polymerizable monomers), and optionally may comprise at least one comonomer.

The term, "ethylene-based polymer," as used herein, refers to a polymer that comprises more than 50 mole percent polymerized ethylene monomer (based on the total amount of polymerizable monomers), and optionally may comprise at least one comonomer.

The term, "propylene-based polymer," as used herein, refers to a polymer that comprises more than 50 mole percent polymerized propylene monomer (based on the total amount of polymerizable monomers), and optionally may comprise at least one comonomer.

The term "functionalized olefin-based polymer," as used herein, refers to a polymer comprising the following: (a) more than 50 mole percent polymerized olefin, such as, for example, monomeric units derived from ethylene or propylene, and where the mole percent is based on the total moles of polymerizable monomers, and (b) at least one polymerized comonomer or one reacted functionalization agent, each containing at least one functional group selected from the following: 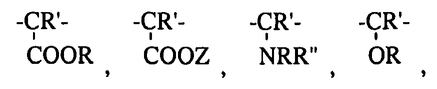 imide, amide, anhydride, dicarboxylates, glycidyl, carbon monoxide, polar group derived from H-TEMPO or an H-TEMPO derivative, silane, or siloxane; and wherein R is hydrogen or alkyl, R' is hydrogen or alkyl, R" is hydrogen or alkyl, and Z is Na+ or K+.

The term "functionalized ethylene-based polymer," as used herein, refers to a polymer comprising the following: (a) more than 50 mole percent polymerized ethylene, based on the total moles of polymerizable monomers, and (b) at least one polymerized comonomer or one reacted functionalization agent, each containing at least one functional group selected from the following: 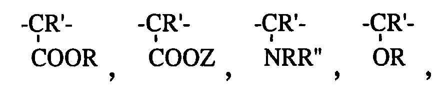 imide, amide, anhydride, dicarboxylates, glycidyl, carbon monoxide, polar group derived from H-TEMPO or an H-TEMPO derivative, silane, or siloxane; and wherein R is hydrogen or alkyl, R' is hydrogen or alkyl, R" is hydrogen or alkyl, and Z is Na+ or K+.

The term "functionalized propylene-based polymer," as used herein, refers to a polymer comprising the following: (a) more than 50 mole percent polymerized propylene, based on the total moles of polymerizable monomers, and (b) at least one polymerized comonomer or one reacted functionalization agent, each containing at least one functional group selected from the following: 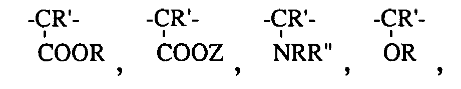 imide, amide, anhydride, dicarboxylates, glycidyl, carbon monoxide, polar group derived from H-TEMPO or an H-TEMPO derivative, silane, or siloxane; and wherein R is hydrogen or alkyl, R' is hydrogen or alkyl, R" is hydrogen or alkyl, and Z is Na+ or K+.

The term "functionalization agent," as used herein, refers to an organic compound containing at least one polar group (for example, maleic anhydride) that can react with a carbon atom located along the backbone of the olefin-based polymer.

### TEST METHODS

Density is determined in accordance with American Society for Testing and Materials (ASTM) procedure ASTM D792-00, Method B. Melt index (I2) in g/10 min, is measured using ASTM D-1238-04, Condition 190°C/2.16 kg. The notation "I10" refers to a melt index, in g/10 min, measured using ASTM D-1238-04, Condition 190°C/10.0 kg. The notation "I21" refers to a melt index, in g/10 min, measured using ASTM D-1238-04, Condition 190°C/21.6 kg. Ethylene-based polymers are typically measured at 190°C, while propylene-based polymers are typically measured at 230°C. MFR means melt flow rate for propylene-based polymers, and is measured using ASTM D-1238-04, condition 230°C/2.16kg.

Adhesion of a film laminated onto a ceramic substrate was measured using ASTM D903, as discussed below.

The following examples illustrate the present invention, but do not, either explicitly or by implication, limit the present invention.

### EXAMPLES

The following resins and substrates were used in the examples below.

### a) Resins

PRIMACOR 1410 is an ethylene-acrylic acid (EAA) copolymer available from The Dow Chemical Company.

PRIMACOR 1321 is an ethylene-acrylic acid (EEA) copolymer available from The Dow Chemical Company.

PRIMACOR 5980i is an ethylene-acrylic acid (EEA) copolymer available from The Dow Chemical Company

AMPLIFY EA 100 is an ethylene-ethyl acrylate (EEA) copolymer available from The Dow Chemical Company.

AMPLIFY GR 207 is a maleic anhydride (MAH) grafted polyethylene available from The Dow Chemical Company.

AMPLIFY GR 204 is a maleic anhydride (MAH) grafted polyethylene available from The Dow Chemical Company.

DOWLEX 2740G is an ethylene-octene copolymer available from The Dow Chemical Company

LDPE 7008 is a Low Density Polyethylene available from The Dow Chemical Company

ELVALOY 2615 AC (available from DuPont) is a copolymer of ethylene and ethyl acrylate (EEA).

LOTADER AX8900 (available from Arkema) is a random ter-polymer of ethylene (E), methyl acrylate and glycidyl methacrylate (GMA) produced by a highpressure radical polymerization process.

PELLETHANE 2355-95AE is a thermoplastic polyurethane (TPU) available from The Dow Chemical Company.

SAFLEX polyvinyl butyral (PVB) available from Solutia. This resin is presently the material of choice for glass lamination for improved security.

INTEGRAL E101 is a specialty film available from The Dow Chemical Company.

Additional property features of some of the resins are shown in Table 5 below.

**Table 5: Characteristic Properties of the Polymer Grades used for Heat Lamination**

| **Polymer grade** | **Density (g/cm³)** | **MFI1 (g/10min)** | **Co-monomer (wt%)** |
|---|---|---|---|
| PRIMACOR 1410 | 0.938 | 1.5 | 9.7 (EAA) |
| PRIMACOR 1321 | 0.935 | 2.5 | 6.5 (EAA) |
| PRIMACOR 5980i | 0.958 | 13.8* | 20.5(EAA) |
| AMPLIFY EA 100 | 0.931 | 6 | 18.5 (EA) |
| AMPLIFY GR 207 | 0.9215 | 2.1 | <0.25 (MAH) |
| AMPLIFY GR204 | 0.952 | 12 | 1.2 |
| ELVALOY 2615 AC | 0.930 | 6 | 15(EEA) |
| LOTADER AX8900 | 0.95 | 6 | 24 (MA); 8 (GMA) |

| | | | |
|---|---|---|---|
| *Melt flow rate at ASTM D 1238 conditions of 125°C/2.16kg | | | |

### b) Substrates (Ceramic Tiles)

Porcelain stoneware tiles were provided by the ITC as test substrates having dimensions of 10 cm x 10 cm and a thickness of 8 mm. The unfired ceramics main crystalline structure is composed of albite (NaAlSi3O8), quartz (SiO2), kaolinite (Al2Si2O5(OH)4) and illite (H2KAl3(SiO4)3). Its open porosity is between 0.1-0.5 percent (ISO 10545-3). Some tiles had a raised pattern on the reverse surface (with crossed ribs, as usual for commercial tiles), and some were flat on the reverse surface. Tiles were manufactured by first mixing and milling the raw materials in a wet milling process to form a suspension (slip). Part of the water, contained in the resulting suspension (slip), was removed, to obtain a granulate, with a moisture content from 5.5 to 7 weight percent (based on the total weight of the granulate). The granulate was next dry pressed to form a tile body, and the resulting tile body dried to reduce the moisture content from 0.2 to 0.5 weight percent (based on total weight of tile), prior to last firing.

### c) Film Preparation

All resins were received as pellets, and were either cast extruded or compression molded into films, as shown in Tables 6, 6a and 6B. Each film was used for heat lamination of the tiles. The extruded films were prepared using film extrusion lines, and each film had a thickness of about 350 µm. The deviation of the thickness distribution for the film samples was about 15 percent.

PELLETHANE 2355-95AE pellets were compression molded in a Hot Molding Press, "Collin Typ.300P," at 190°C. Prior to the compression molding, the granules were dried for 2 hours at 100°C using an oven.

The INTEGRAL sample was received as a film roll having a thickness of about 88 µm, and the PVB sample was received as a film having a thickness of about 900 µm.

**Table 6: Cast Extruded and Compression Molded Films**

| Sample Nr | Composition | Type of Processing | Thickness µm |
|---|---|---|---|
| 6.1 | PRIMACOR 1410 | Coextrusion Cast-Collin | 380 |
| 6.2 | PRIMACOR 1321 | Coextrusion Cast-Collin | 380 |
| 6.3 | AMPLIFY EA 100 | Cast Mono Layer-Collin (30mm) | 350 |
| 6.4 | AMPLIFY GR 207 | Cast Mono Layer-Collin (30mm) | 350 |
| 6.5 | ELVALOY 2615 AC | Cast Mono Layer-Collin (30mm) | 350 |
| 6.6 | LOTADER AX8900 | Cast Mono Layer-Collin (30mm) | 350 |
| 6.7 | PELLETHANE 2355-95AE | Compression molding (Collin) | 900 |

**Table 6A: Extrusion Conditions for Samples 6.1 and 6.2 in Table 6**

| | Film of 380 micron | | |
|---|---|---|---|
| layer | A | B | |
| cylinder 1 | 200 | 220 | degC |
| cylinder 2 | 230 | 225 | degC |
| cylinder 3 | 230 | 230 | degC |
| cylinder 4 | 210 | 240 | degC |
| zone 5 | 210 | 260 | degC |
| screw | 150 | 18 | rpm |
| motor | 2.4 | 2.2 | A |
| melt-t | 194 | 228 | degC |
| melt-p | 85 | 54 | bar |
| take-off | 8 | 8 | m/min |
| feeding | 6.7 | 1.5 | kg/h |
| coex block 1 | 240 | | degC |
| coex block 2 | 240 | | degC |
| die 1 | 240 | | degC |
| die 2 | 240 | | degC |
| die 3 | 240 | | degC |
| thickness | 380 | | micron |

**Table 6B: Extrusion Conditions for Samples 6.3 through 6.6 in Table 6**

| Sample | 6.3 | 6.4 | 6.5 | 6.6 | |
|---|---|---|---|---|---|
| layer | A=B | A=B | A=B | A=B | |
| cylinder 1 | 190 | 160 | 150 | 150 | degC |
| cylinder 2 | 230 | 170 | 160 | 160 | degC |
| cylinder 3 | 230 | 180 | 170 | 170 | degC |
| cylinder 4 | 210 | 190 | 180 | 180 | degC |
| adapter | 210 | 195 | 190 | 190 | degC |
| die 1 | 220 | 200 | 195 | 195 | degC |
| die 2 | 220 | 210 | 195 | 195 | degC |
| screw | 47 | 67 | 78 | 76 | rpm |
| motor | 4 | 9 | 5 | 5 | A |
| melt-t | 220 | 203 | 190 | 185 | degC |
| melt-p | 87 | 150 | 85 | 80 | kg/sqcm |
| take-off | 3.5 | 2.7 | 3.1 | 3.1 | m/min |
| thickness | 350 | 350 | 350 | 350 | |

A number of 3 layer coextruded structures were also prepared, as shown in Table 6C.

**Table 6C: Cast Coextruded Films**

| Composition (A - 30%, C - 30%, D - 40%) | Type of Processing | Thickness µm |
|---|---|---|
| DOWLEX 2740/DOWLEX 2740/ AMPLIFY GR 204 Coex 1 | Cast Coex Layer - Collin | 550 |
| LDPE 7008/ LDPE 7008/ PRIMACOR 5980i Coex 2 | Cast Coex Layer - Collin | 375 |

These films were produced on a Cast Collin coextrusion machine with the following characteristics, as shown in Table 6D.

**Table 6D: Cast Collin Coextrusion Machine**

| Maximum hauloff speed | 60 m/min, standard speed 30 m/min |
|---|---|
| Extruders size | 3 extruders 2 x 25mm - 28D (A) and 1x30mm -28D (C & D) |
| Die size | 300 mm |
| Standard die Gap | 0.7 mm |
| Max. Output* | 5-20 kg/hour |
| Max. Layflat width | 240-260 mm |

| | |
|---|---|
| *References depending on materials used. | |

The films were produced using the extrusion conditions as outlined in Table 6E and Table 6F.

**Table 6E - Coextruded Film Extrusion Conditions - Coex 1**

| | Extruder A | Extruder C | Extruder D | |
|---|---|---|---|---|
| cylinder 1 | 213 | 225 | 124 | degC |
| cylinder 2 | 250 | 250 | 132 | degC |
| cylinder 3 | 252 | 248 | 134 | degC |
| cylinder 4 | 250 | 245 | 135 | degC |
| adapter | 244 | 244 | 140 | degC |
| die 1 | 175 | | | degC |
| die 2 | 175 | | | degC |
| screw | 125 | 90 | 125 | rpm |
| motor | 3.9 | 6.7 | 3.1 | A |
| melt-t | 240 | 247 | 148 | degC |
| melt-p | 170 | 247 | 148 | bar |
| take-off | 3.2 | | | m/min |

**Table 6F - Coextruded Film Extrusion Conditions Coex - 2**

| | Extruder A | Extruder C | Extruder D | |
|---|---|---|---|---|
| cylinder 1 | 155 | 149 | 111 | degC |
| cylinder 2 | 165 | 159 | 110 | degC |
| cylinder 3 | 165 | 165 | 110 | degC |
| cylinder 4 | 165 | 166 | 110 | degC |
| adapter | 165 | 165 | 110 | degC |
| die 1 | 140 | | | degC |
| die 2 | 140 | | | degC |
| screw | 140 | 4.2 | 0.7 | rpm |
| motor | 2.8 | 6.7 | 3.1 | A |
| melt-t | 158 | 157 | 106 | degC |
| melt-p | 95 | 96 | 21 | bar |
| take-off | 2.8 | | | m/min |

### d) Heat Lamination

The heat lamination of the tiles was performed in a Hot Molding Press "Collin Typ.300P." Each tile was laminated with a film of approximately the same surface dimensions. The tile was placed on the polymer film inside a compression molding steel frame. In order to avoid any sticking of the polymer film to the surface of the steel frame, thin sheets of MYLAR or TEFLON were inserted over the base surface of the frame.

All heat-laminated samples were placed in the press, and compression pressed for 15 minutes at a given temperature, as shown in Table 7. Subsequently, the frame containing the laminated tile was removed from the press, and the entire assembly was cooled to room temperature. During this cooling period, the upper steel plate component remained on top of the laminated tile. All heat lamination samples are summarized in Table 7.

**Table 7: Heat Laminated Samples and Conditions**

| Polymer grade | Film Thickness | Lamination Temperature | Protection Sheet |
|---|---|---|---|
| Reference (non-laminated) | 0 µm | untreated | |
| PRIMACOR 1410 | 760 µm | 180°C | MYLAR |
| PRIMACOR 1321 | 760 µm | 180°C | MYLAR |
| AMPLIFY EA 100 | 700 µm | 180°C | MYLAR |
| AMPLIFY GR 207 | 700 µm | 180°C | MYLAR |
| ELVALOY 2615 AC | 700 µm | 180°C | TEFLON |
| LOTADER AX8900 | 700 µm | 180°C | TEFLON |
| PELLETHANE 2355-95AE* | 900 µm | 190°C | TEFLON |
| SAFLEX PVB | 900 µm | 140°C | TEFLON |
| Coex 1 | 550 | 180°C | MYLAR |
| Coex 2 | 375 | 180°C | MYLAR |
| INTEGRAL E101 | 800 µm | 180°C | MYLAR |

| | | | |
|---|---|---|---|
| *No adhesion to tile | | | |

All polymer grades used for heat lamination, except PELLETHANE, adhered to the tile. Heat lamination with the PELLETHANE grade was tried another time at 200°C, but with the same result, no adhesion.

### Pastes and Dispersions - Comparative Examples

A spectrum of products available on the market, which are generally used in construction for fixing tiles or repairing cracks and holes, was included into the test series for performance comparison. These products are shortly summarized below, based on their application and benefits. These types of products are generally applied in form of pastes or dispersions, each being characterized by a specific setting time.

"Cemento cola en pasta" (Beissier, S.A.) is a dispersion adhesive based on acrylic copolymers, and using water as solvent, and having some type of ceramic powder as filler. The adhesion is used for fixation of ceramic tiles and polystyrene to plaster, old tile walls, wood, paints, glass, and concrete (typically interior applications). It is resistant to humidity, and is flexible, and applicable in a temperature range of 5°C to 30°C. The setting time is about 20 minutes.

Acrylic filling compound "Sellaceys® Grietas Masilla acrílica" (Ceys, S.A.) is especially designed for sealing cracks and holes, as well as flexible joints, and is characterized by a very good adhesion to all kind of materials for exterior and interior use.

Silicon acid "Sellaceys® Silicona àcida, Cocinas y baños" (Ceys, S.A.) is characterized as resistant against humidity and temperatures between -20°C and 100°C. It is designed for sealings in baths, sinks, tiles, preventing permeation of water and odor.

Prestolith special resin (Motip Dupli GmbH) is a package of unsaturated elastic polyester resin and hardener. It is especially designed for use in combination with fiberglass tissue and fiberglass mat, to fix large holes, rust spots, and damaged spots in metal, wood, and concrete. The hardener is usually added by 2.5 percent, and the hardened product resist temperatures up to 120°C. It is resistant to acids, lyes, propellants, solvents, water and de-icing salts.

Polyurethane based product "Masilla Pegamento Poliuretano" (Leroy Merlin, S.A.) contains 3-isocyanatemethyl-3,5,5-trimethylcyclohexyl isocyanate, and is used as an elastic and impermeable sealing agent for terraces, roofing elements, eaves gutters, and swimming pools. It is designed for fixation of elements in various applications of construction.

SYNTEGRA polyurethane water-based dispersion (in 2005 commercially available from The Dow Chemical Company). The product grade used in this study is SYNTEGRA YM 2200.

Resin 466 is an experimental Liquid Epoxy Resin (available from The Dow Chemical Company). It is regarded as a flexible epoxy resin providing good adhesion. This resin requires the use of a second component, a curing agent. A standard double-side adhesive (Plasto SAS) having a thickness of about 100 µm was also included into the testing.

The comparative product samples are summarized in Table 8. The double side adhesive was glued on the tile in several stripes. These stripes had a thickness of about 100 µm. The commercial products, such as acrylic filling, silicon acid, and polyurethane were applied as usual construction applications, for example, applying a line of paste on the tile and flattening it with a spatula. The final film thickness was similar to the film thickness of the laminated sheet. All these samples were cured at room temperature under a hood for about 72 hours. Another sample was a commercial tile having attached a polyester-type mesh.

**Table 8: Comparative Samples**

| |
|---|
| Type of Material |
| Double -side adhesive |
| Acrylic dispersion adhesive |
| Acrylic filling |
| Silicon acid |
| Polyester resin |
| Polyurethane resin |
| PU dispersion |
| Epoxy resin |
| Mesh (ITC) |

### f) Testing Procedure

An adaptation of ISO 3537 test method (Road Vehicles - Safety Glazing Materials - Mechanical Tests (1999)) was used in this study. ISO 3537 specifies a "ball drop test" that is used to determine the performance of safety glass in a road vehicle. This test set-up was adapted to simulate the fracture of rear-ventilated facades. In the adapted test, the dropping of a hard steel ball represented a small hard object (for example, a stone). Each tile was placed upon the frame, and supported only at its edges.

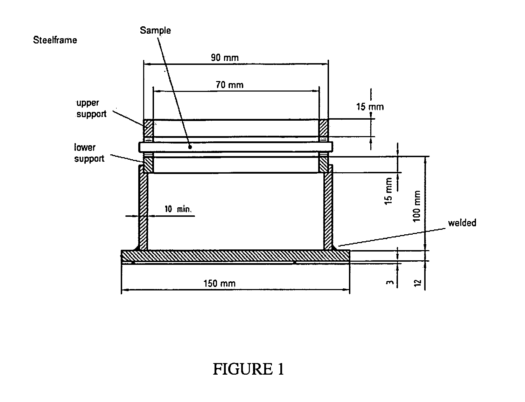

A testing frame was constructed as shown in Figure 1. The frame dimensions were chosen to accommodate each 10 x 10 cm² tile. An upper support typically used for the safety glass testing was not used, since in rear-ventilated façade cladding, the tiles are not clamped within a frame, but only the backside of the tile is fixed to the frame.

To perform the test, the tile was place horizontally on the testing support with the resin laminated or coated surface placed face down, and a hardened steel ball was dropped onto the exposed surface of the tile. The steel ball had a weight of 50 grams, and the drop height was varied between 50 cm, 80 cm and 100 cm, depending if fracture occurred or not. Two probets per samples were tested to obtain a general assessment of the performance of different products.

Several test heights were tried, using blank reference samples to determine the optimal conditions for the impact testing. A height of 50 cm was found to be a critical drop height, in which the blank tiles began to fracture. Thus, all samples were tested first at 50 cm, and in case of no fracture, again at 80 cm.

A second test series was run with thinner (6 mm) flat tiles. Despite their lower mechanical resistance compare to previous tiles, the presence of the polymer back sheet improved impact due to the good adhesion of the film to the tile. Therefore, the same test heights, 50 cm and 80 cm, were used for the thinner tiles.

During the testing, the following three main parameters were identified as affecting the performance of the laminated or resin coated tiles, as follows: the rigidity of the resin film or resin coating, the adhesion of the resin film or resin coating to the tile, and the integrity of the laminated or coated tile.

The term "integrity" refers to the ability of the broken laminated or coated tile to remain in the construction frame. The rigidity of the resin film was seen to have a direct impact on the integrity of the laminated tile once broken. A more rigid resin film provides stability to the broken laminated tile, whereas a more flexible film, or even an elastic film, was not able to keep the broken pieces in place. The adhesion of the resin film to the tile was also critical. A very good adhesion reinforces the broken tile, such that the waste edges are held tight together, and are prevented from splicing-off. In addition, a good adhesion will avoid the fall-off of broken pieces. Apart from these parameters, the energy absorption by the backing material will play a role as well.

Based on these findings, the three parameters, film rigidity, film adhesion and laminate or coating integrity were evaluated for each sample. Performance ratings were given for each parameter from 0 to 3. A "zero" rating is used for "no adhesion," and the numbers 1 (low), 2 (medium) and 3 (high) characterize the level of performance for each parameter. The results are summarized in Tables 9A and 9B.

**Table 9A: Ball Drop Test Results***

| **Material (film of layer)** | **Ratings** | | | **Observations (e.g. number of broken pieces)** | |
|---|---|---|---|---|---|
| | **Rigidity (film)** | **Adhesion (film)** | **Integrity (tile+film)** | **Fracture at 50 cm drop height** | **Fracture at 80 cm drop height** |
| Reference | 0 | 0 | 0 | 1 sample (3 pieces) | 1 sample (4 pieces) |
| PRIMACOR 1410 | 3 | 3 | 3 | No | 2 samples (5/3 pieces) |
| PRIMACOR 1321 | 3 | 3 | 3 | No | 2 samples (3/5 pieces) |
| AMPLIFY EA 100 | 2 | 2 | 2 | No | 2 samples (5/5 pieces) |
| AMPLIFY GR 207 | 3 | 3 | 3 | No | 2 samples (3/5 pieces) |
| ELVALOY 2615 AC | 2 | 2 | 2 | No | 2 samples (6/4 pieces) |
| LOTADER AX8900 | 1 | 3 | 2 | 2 samples (3/3 pieces) | |
| PELLETHANE 2355-95AE | 2 | 0 | 0 | No adhesion | |
| SAFLEX PVB | 2 | 2 | 1 | No | 2 samples (5/4 pieces) |
| Coex 1 | 3 | 3 | 2 | No | |
| Coex 2 | 2 | 3 | 3 | No | |
| INTEGRAL E101 | 3 | 2 | 3 | 2 samples (5/3 pieces) | |
| Double -side adhesive | 1 | 3 | 1 | No | 2 samples (4 pieces) |

| | | | | | |
|---|---|---|---|---|---|
| * Substrate is the ITC porcelain stoneware tile (10 cm x 10 cm x 8 mm). | | | | | |

**Table 9B: Ball Drop Test Results***

| **Material (film of layer)** | **Ratings** | | | **Comment** | **Observations (e.g. number of broken pieces)** | |
|---|---|---|---|---|---|---|
| | **Rigidity (film)** | **Adhesion (film)** | **Integrity (tile+film)** | | **Fracture at 50 cm drop height** | **Fracture at 80 cm drop height** |
| Reference | 0 | 0 | 0 | | 1 sample (3 pieces) | 1 sample (4 pieces) |
| Acrylic dispersion adhesive | 3 | 3 | 0 | No film, mortar-like | No | 2 samples (4/3 pieces) |
| Acrylic filling | 1 | 3 | 1 | | No | 2 samples (4/5 pieces) |
| Silicon acid | 1 | 3 | 1 | | No | 2 samples (4/5 pieces) |
| Polyester resin | 3 | 3 | 0 | No film, mortar-like | 1 sample (3 pieces) | 1 sample (3 pieces) |
| Polyurethane resin | 1 | 3 | 1 | | No | 2 samples (5/5 pieces) |
| Dow PU dispersion | 2 | 3 | 2 | | 1 sample (4 pieces) | 1 sample (4 pieces) |
| Dow Epoxy resin | 3 | 3 | 2 | 6 mm thick coating | fracture at 80 cm (4 pieces) and 100 cm (5 pieces) | |
| Epoxy Mesh (provided by ITC) | 3 | 3 | 3 | 12 mm thick | fracture at 100 cm | |
| PRIMACOR 1410 | 3 | 3 | 3 | 6 mm thick | | 2 samples (4/7 pieces) |
| AMPLIFY GR207 | 3 | 3 | 3 | 6 mm thick | 1 sample (3 pieces) | 1 sample (5 pieces) |
| AMPLIFY EA 100 | 3 | 3 | 3 | 6 mm thick | 2 samples (5/4 pieces) | |
| LOTADER AX8900 | 3 | 3 | 2 | 6 mm thick | 2 samples (4/5 pieces) | |

| | | | | | | |
|---|---|---|---|---|---|---|
| * Substrate is the ITC porcelain stoneware tile (10 cm x 10 cm); tile thickness is 8 mm, unless stated otherwise. | | | | | | |

Both PRIMACOR grades (1410 and 1321) and INTEGRAL E101 fulfilled the above-mentioned requirements best. Although the LOTADER AX8900 sample and the Dow polyurethane dispersion sample showed good adhesion, the rigidity of those films was insufficient to keep the integrity. Nevertheless, the rigidity of the formers could be improved with another grade or multilayer film structure. PRIMACOR 1410 absorbed the energy of the impact better, and fracture occurred at 80 cm, while the AMPLIFY GR207, AMPLIFY EA100 and LOTADER AX8900 laminations broke at 50 cm.

The "mesh" sample performed very well, having the mesh attached to the backside of the tile. However, this sample cannot be compared with the other samples, since it is made of a ceramic tile, which is of different composition, and of greater thickness (11 mm). Since no fracture occurred at "50 cm" and "80 cm" drop heights, the substrate was tested at "100 cm," where it finally broke. A reference sample of the same type, without a mesh, broke first at 80 cm (not at 50 cm). In addition, this mesh is applied during an off-line post process, which adds additional costs to the manufacture of the tile. The heat lamination of tiles could be performed in the production line of ceramic tiles, by adding a heat lamination unit, and thus, reduce manufacturing costs.

For the tiles adhered with epoxy resin, the fracture occurred at 80 and 100 cm, meaning that impact was highly absorbed. Integrity of the tile was also good, however, since the cured epoxy resin is a rigid crosslinked structure, a high impact could break the tile together with the non-elastic crosslinked epoxy network.

In general, the overall integrity of the broken resin laminated tiles is much better compared to tiles prepared with a layer of conventional construction adhesive, even though the adhesion in the latter case may be better. However, to keep the integrity of the tile, the conventional construction materials are either too flexible or too rigid, such that the applied adhesive layer breaks together with the ceramic tile.

Moreover, multilayer films having one adhesion layer (that will be attached to the tile) and, for example, a film formed from a PRIMACOR/HDPE blend, could give better results. The use of a mesh, in addition to a thermoplastic material should also improve results.

### g) Adhesion Test

To test adhesion, the 180° peel test was chosen due its availability, simplicity, low cost, and because it is well adapted to the adhesion measurement of joints composed of a rigid element and a flexible one. The tests are based on the ASTM D903 standard (ASTM D903-98(2004), Standard Test Method for Peel or Stripping Strength of Adhesive Bonds, ASTM International. (2004)).

### (i) Polymer Preparation - Compression Molded FIlms

Compression plates were elaborated using a heating press Collin Mod. P300, following the International Standard ISO 1872-2 [ISO 1872-2:2007, Plastics-Polyethylene (PE) molding and extrusion materials - Part 2: Preparation of test specimens and determination of properties, ISO. (2007)]. A steel frame of 200 mm x 200 mm x 1mm was used as mold. The polymer was weighted, based on its density, and placed into the press between two Mylar or Teflon films (for the Primacor^{™} and the Amplify^{™} resins, respectively) and two steel plates of 4 mm of thickness.

### (ii) Polymer Preparation- Extrusion Films

Cast films (280 µm) were extruded on a Collin 30 mm extruder, using the following melt temperatures and process conditions as shown in Tables 10 and 10A.

**Table 10: Melt Temperatures**

| Sample # | Polymer grade | Tm [°C] |
|---|---|---|
| 53 | PRIMACOR 1410 | 182 |
| 55 | PRIMACOR 3460 | 154 |
| 56 | AMPLIFY GR 205 | 162 |
| 57 | AMPLIFY GR 207 | 188 |

**Table 10A: Extruder Conditions for Film Extrusion of Samples in Table 10.**

| Sample # | 53 | 55 | 56 | 57 | |
|---|---|---|---|---|---|
| layer | A=B | A=B | A=B | A=B | |
| cylinder 1 | 177 | 155 | 160 | 180 | degC |
| cylinder 2 | 186 | 150 | 163 | 185 | degC |
| cylinder 3 | 183 | 155 | 169 | 191 | degC |
| cylinder 4 | 190 | 160 | 170 | 195 | degC |
| cylinder 5 | 202 | 167 | 180 | 206 | degC |
| coex block 1 | 200 | 170 | 180 | 215 | degC |
| coex block 2 | 200 | 170 | 181 | 215 | degC |
| die 1 | 200 | 170 | 179 | 215 | degC |
| die 2 | 200 | 171 | 180 | 215 | degC |
| die 3 | 200 | 170 | 180 | 215 | degC |
| screw | 111 | 111 | 116 | 111 | rpm |
| motor | 5.1 | 1.7 | 7.2 | 7.8 | A |
| melt-t | 182 | 154 | 162 | 188 | degC |
| melt-p | 131 | 98 | 268 | 223 | kg/sqcm |
| take-off | 2.8 | 3 | 2.8 | 2.7 | m/min |
| thickness | 280 | 280 | 280 | 280 | micron |

### (iii) Polymer Adhesion to the Substrate

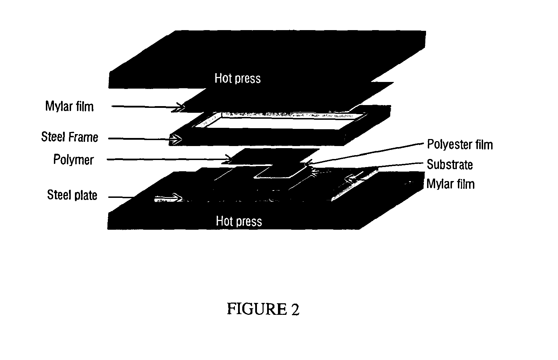

The polymer and the substrate (ITC porcelain stoneware tile (10 cm x 10 cm x 8 mm)) were adhered together by compression force, using the same press employed for the laminated tiles fabrication. To improve the uniformity of the applied force, and reduce the localization of force, the substrate was placed over a steel plate, inside a rectangular steel frame of the desired final thickness (final thickness of laminate = 850 microns). In this way, the pressure was not only distributed over the polymer/substrate system, but also over the frame, and the substrate was not damaged. Additionally, a fixed final coating thickness was obtained. The set-up used for this lamination is shown in Figure 2.

A polyester film, 25 µm, was placed between the substrate and the polymer film, in order to avoid adhesion in a specified interfacial area between substrate and film, and to allow the film to be displaced 180° for the peel test. In the case of the compression molded films (1mm thickness), a single polymer film was used, and in the case of the extruded films, three film layers of 300 micron were used to obtain a final thickness of 850 micron.

A MYLAR or a TEFLON film, for the PRIMACOR resin or the AMPLIFY resin respectively, was placed over the polymer to prevent the bonding of the film to the press. Finally, the entire setup was placed in the heating press. The press temperature and pressure profiles are shown in Table 11.

**Table 11: Temperature/Pressure Profile used for the Polymer Adhesion to the Substrates.**

| Phase | Temperature [°C] | Pressure [bar] | Time [s] |
|---|---|---|---|
| Temperature stabilization prior molding | 180°C | - | 600 |
| Polymer melting | 180°C | 1 | 300 |
| Cooling | Tf=50°C | 1 | 600 |

The critical parameter for the sample preparation was the final polymer thickness, given by the difference between the thickness of the steel frame and the thickness of the substrate. If the frame was too thick, no pressure was exerted on the polymer, and air bubbles were trapped in the polymer/ceramic interface, giving an underestimated peel force value. If the frame was too thin, a thinner polymer coating was generated, the polymer film broke before the start of the peel test, and no adhesion value was obtained. By testing different frame thicknesses, a good compromise was found using frames "0.15 mm" thinner than the sum of the substrate thickness and the initial polymer thickness.

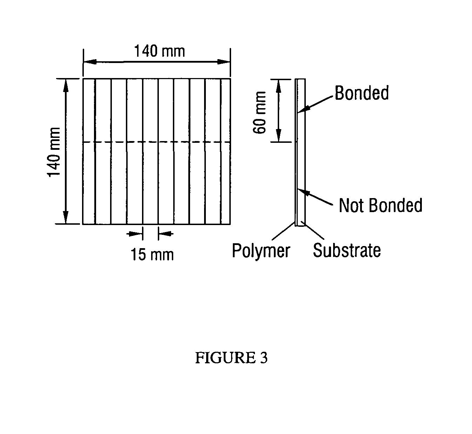

The sample dimensions were modified from the suggested dimensions on the standard, due to the limitations imposed by the substrates dimensions (140 mm x 140 mm). Then, the test specimens had a "15 mm" width, with a bonded length of 60 mm and a free end of 80 mm. A schematic of the test specimen is shown in Figure 3.

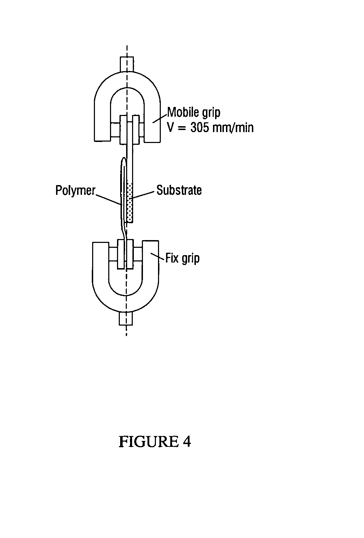

The specimen dimensions were measured prior to test. The debonding was initiated by hand for an approximate distance of 10 mm. Peel strength was measured using an INSTRON 5564 tensile machine, with a load cell of 1kN, and equipped with grips, with the possibility of moving the axis of test. The substrate was fixed to the mobile grip, the axis of test was placed on the bonding plane, and the distance between the free end of the ceramic and the fix grip was set to 15 mm. A schematic of the test set-up is shown in Figure 4. The polymer film was turned back by an angle of 180°, and attached to the fix grip. The traveling speed was set to 305 mm/min, to give a separation of 152.5 mm/min.

The peel force was determined from the load versus distance graph, by drawing the best average load line. At least 5 specimens were tested per sample, and the arithmetic mean and standard deviation of the ratio between the peel force and the specimen width were reported.

### h) Results

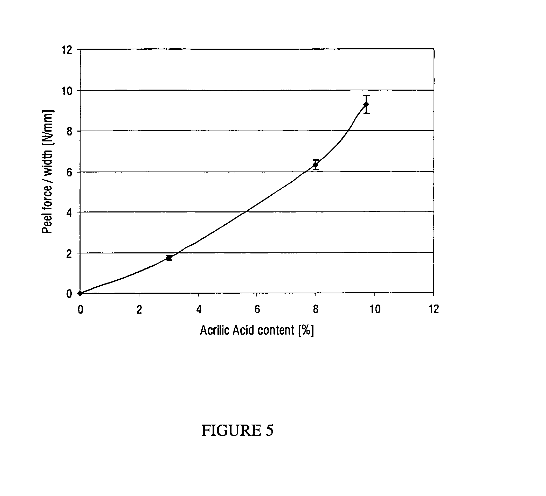

As can be seen in Figure 5, for the same substrate and for the same MFI, adhesion increases with increasing the comonomer content. Similar results have been found for other substrates like aluminum. It is believed that the increase of the surface polarity, surface acidity, and surface basicity, with increasing the acid content, increases the probability of chemical bonding to the substrate.

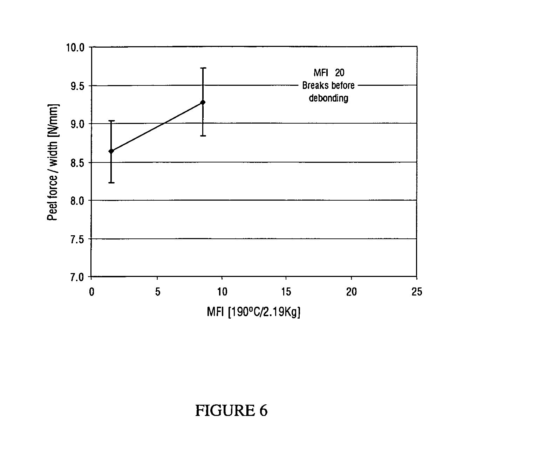

For the same comonomer content, adhesion increases with increasing the MFI, as shown in Figure 6 (effect of MFI on adhesion for EEA copolymers, each laminated to an ICT ceramic; comonomer content = 9.7 percent). This is believed due to the modification of the polymer surface properties with the MFI variation. Materials of lower MFI exhibit less surface polarity.

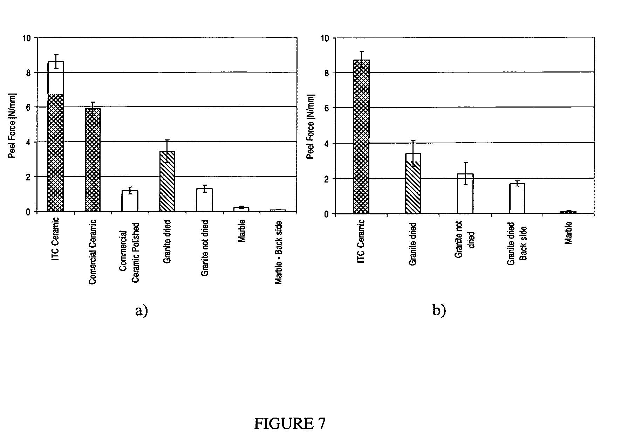

Another difference between the different ceramics tested was surface roughness. With a higher surface roughness, the actual surface area is also higher, and the possibility of interaction between the polymer and the substrate is higher. This explains the results in adhesion, which show a higher adhesion for the higher roughness ceramic, and a lower for the lower roughness (ITC > Commercial > Commercial Polished). These results are shown in Figures 7a and 7b (for Figure 7a, the resin is Primacor^{™} 1460, and for Figure 7b, the resin is Amplify^{™} GR207). However, for real applications, the side of adhesion will be never on the polished side of a ceramic.

For the same resin film, adhesion is lower for the natural stones than for ceramics, especially for marble, where adhesion is close to zero. From observing the interface of a sample subject to the peel test, it can be seen that in the case of ceramics, the failure mechanism is adhesive, whereas for the natural stones it is cohesive (see Figure 7).

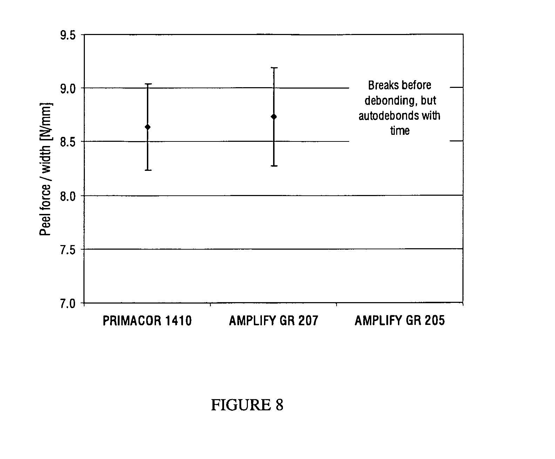

As can be seen in Figure 8, the adhesion is almost the same for the PRIMACOR 1410, and for the AMPLIFY GR 207, regardless of the substrate. Increasing the comonomer content of the Amplify from "<0.25 percent" to ">1.0 percent" (AMPLIFY GR 207 and GR 205, respectively), increases the adhesion.

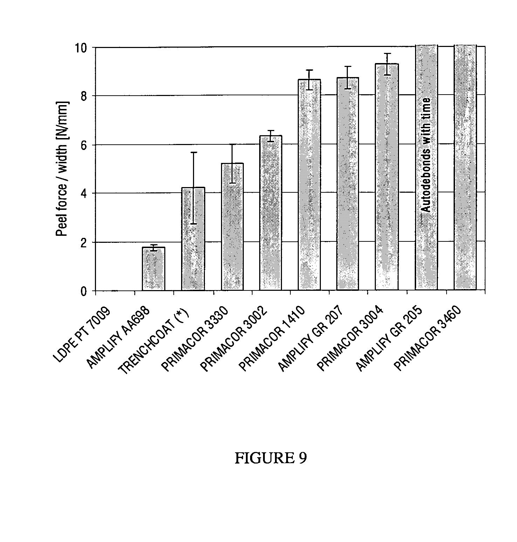

Figure 9 compares the adhesion of the studied polymers laminated to the ceramic prepared by the Instituto de Tecnología Cerámica (ITC). The higher values of adhesion are for the AMPLIFY GR 205 and the PRIMACOR 3460.

Although the invention has been described in certain detail through the preceding specific embodiments, this detail is for the primary purpose of illustration. Many variations and modifications can be made by one skilled in the art, without departing from the spirit and scope of the invention, as described in the following claims.

## Claims

1. An article comprising at least the following components:
A) a substrate formed from a composition comprising at least one ceramic component or at least one natural stone component,
B) a polymer layer formed from a composition comprising at least one functionalized olefin-based polymer; and
wherein the polymer layer is formed over one surface of the substrate.

2. The article of Claim 1, wherein the polymer layer is in the form of a film or a coating or a foam.

3. The article of Claim 1, wherein the polymer layer is in the form of a laminated film.

4. The article of Claim 1, wherein the polymer layer is in the form of an extrusion coating.

5. The article of any of Claims 1-4, wherein article comprises at least two substrates.

6. The article of Claim 5, wherein the polymer layer is formed between the two substrates.

7. The article of any of Claims 1-6, wherein article comprises at least two polymer layers.

8. The article of Claim 7, wherein one polymer layer is formed over one surface of the substrate, and the other polymer layer is formed over another surface of the same substrate.

9. The article of any of Claims 1-8, wherein the functionalized olefin-based polymer is selected from a functionalized ethylene-base polymer or a functionalized propylene-based polymer.

10. The article of Claim 9, wherein the functionalized olefin-based polymer is a functionalized ethylene-base polymer.

11. The article of Claim 10, wherein the functionalized ethylene-base polymer is a highly branched polymer comprising units derived from ethylene and an acrylic acid or an acrylate.

12. The article of Claim 10, wherein the functionalized ethylene-base polymer is an ethylene based copolymer formed from a high pressure polymerization process, and comprising comonomer units derived from acrylic acid or an acrylate.

13. The article of Claim 11 or Claim 12, wherein the comonomer is derived from an acrylate, and the acrylate is selected from ethylacrylate, methylacrylate or butylacrylate.

14. The article of Claim 11 or Claim 12, wherein the comonomer is derived from acrylic acid.

15. The article of Claim 14, wherein the acrylic acid is present in an amount greater than, or equal to, 5 weight percent, based on the total weight of polymerizable monomers.

16. The article of Claim 10, wherein the functionalized ethylene-base polymer comprises units derived from ethylene and maleic anhydride.

17. The article of Claim 16, wherein the units derived from maleic anhydride are present in an amount greater than, or equal to, 0.5 weight percent, based on the total weight of the functionalized polymer.

18. The article of Claim 10, wherein the functionalized ethylene-base polymer is selected from the group consisting of polyethylene acrylic acid copolymer, an anhydride grafted polyethylene, ethylene butylacrylate, ethylene glycidyl methacrylate, ethylene methacrylic acid, ethylene vinyl alcohol, and combinations thereof.

19. The article of Claim 10, wherein the functionalized ethylene-based polymer comprises at least one polar group selected from carboxylic acid; methyl carboxylate, ethyl carboxylate, butyl carboxylate and other alkyl-carboxylates; anhydride; dicarboxylic acid; imide, amine, glycidyl; carbon monoxide, polar group derived from H-Tempo; silane; or siloxane.

20. The article of any of the preceding claims, wherein the functionalized olefin-based polymer has a density from 0.86 to 0.95 g/cc.

21. The article of any of the preceding claims, wherein the functionalized polymer has a melt index (I2: 2.16kg/190°C) from 0.5 g/10 min to 50 g/10 min.

22. The article of any of the preceding claims, wherein the substrate is formed from a composition comprising at least one ceramic component.

23. The article of any of the preceding claims, wherein the substrate is formed from a composition comprising at least one of the following: oxides and combinations thereof; alumina; silica, silicates; silicoaluminates, zirconia; carbides; nitrides; silicides, combinations of oxides and non-oxides; or combinations thereof.

24. The article of Claim 22, wherein the substrate is selected from the group consisting of a ceramic earthenware, stoneware and porcelain stoneware.

25. The article of Claim 22, wherein the substrate comprises 62-72 wt percent SiO2, and 15-25 wt percent Al2O3, based on the total weight of the substrate.

26. The article of Claim 22, wherein the substrate has the following composition: 65-75 wt percent SiO2, 14-21 wt percent Al2O3, and 2-5 wt percent K2O, based on the total weight of the substrate.

27. The article of Claim 22, wherein the substrate has the following composition: 65-75 wt percent SiO2, 14-21 wt percent Al2O3, 2-5 wt percent K2O, 2 wt percent Na2O, 0.01 wt percent MnO, 0.75 wt percent TiO2, 0.7 wt percent Fe2O3, 0.5 wt percent CaO; 0.3 wt percent MgO, and 0.1 wt percent P2O5, based on the total weight of the substrate.

28. The article of Claim 22, wherein the substrate has the following composition: 65-75 wt percent SiO2, 14-21 wt percent Al203, 2-5 wt percent K2O, 0.01-0.05 wt percent MnO, 0.2-0.8 wt percent TiO2, 0.5-3 wt percent Fe2O3, 0-2 wt percent FeO, 0.5 wt percent CaO; 0.1-1 wt percent MgO, and 0-0.2 wt percent P2O5, based on the total weight of the substrate.

29. The article of any of Claims 1-28, wherein the substrate is a composite ceramic substrate.

30. The article of Claim 29, wherein the composite ceramic substrate comprises a matrix, which comprises a ceramic, a metal, a glass, a polymer, or combinations thereof.

31. The article of any of Claims 1-30, wherein the substrate further comprises at least one thermoplastic polymer.

32. The article of Claim 29 or Claim 31, wherein the substrate is a multi-layered structure.

33. The article of any of Claims 1-32, wherein the substrate further comprises at least one material selected from the group consisting of wood, metal, glass, and combinations thereof.

34. The article of any of Claims 1-33, wherein the substrate further comprises at least one laminate layer comprising glass.

35. The article of Claim 34, wherein the laminate layer further comprises at least one thermoplastic polymer.

36. The article of any of Claims 1-21, wherein the substrate is formed from a composition comprising at least one natural stone component.

37. The article of Claim 36, wherein the natural stone component is selected from the group consisting of granite, quartz, marble, limestone and slate.

38. The article of Claim 37, wherein the natural stone component is selected from granite or marble.

39. The article of any of Claims 36-38, wherein the substrate is a natural stone composite.

40. The article of any of Claims 36-39, wherein the substrate further comprises at least one thermoplastic polymer.

41. A building façade comprising at least one component formed from the article of any of the preceding claims.

42. A wall structure comprising at least one component formed from the article of any of Claims 1-40.

43. A flooring structure comprising at least one component formed from the article of any of Claims 1-40.

44. A roofing structure comprising at least one component formed from the article of any of Claims 1-40.

45. A ceiling structure comprising at least one component formed from the article of any of Claims 1-40.

46. A piece of furniture comprising at least one component formed from the article of any of Claims 1-40.
